# EUROPÄISCHE PATENTSCHRIFT

(11) **EP 4 232 845 B1**
(45) Veröffentlichungstag und Bekanntmachung des Hinweises auf die Patenterteilung: **06.11.2024**
(21) Anmeldenummer: 21790448.1
(22) Anmeldetag: 12.10.2021
(51) Int. Cl.: G01S 7/52, G01S 7/521, G01S 15/931

(54) **ULTRASCHALLSENDEEMPFÄNGER UND HERSTELLUNGSVERFAHREN DAFÜR**
ULTRASONIC TRANSCEIVER AND PRODUCTION METHOD FOR SAME
ÉMETTEUR-RÉCEPTEUR ULTRASONIQUE ET PROCÉDÉ DE FABRICATION CORRESPONDANT

(30) Priorität: 21.10.2020 DE 102020127643
(43) Veröffentlichungstag der Anmeldung: 30.08.2023
(73) Patentinhaber: Valeo Schalter und Sensoren GmbH, 74321 Bietigheim-Bissingen (DE)
(72) Erfinder: HAAG, Fabian, 74321 Bietigheim-Bissingen (DE); BOU SALEH, Paul, 74321 Bietigheim-Bissingen (DE); WEHLING, Hans, Wilhelm, 74321 Bietigheim-Bissingen (DE)
(74) Vertreter: Enge, Sebastian
(86) Internationale Anmeldenummer: PCT/EP2021/078095
(87) Internationale Veröffentlichungsnummer: WO 2022/084091

(56) Entgegenhaltungen:
- EP-A2- 1 260 965
- DE-A1- 102018 115 553
- DE-A1- 3 826 799

## Beschreibung

Die vorliegende Erfindung betrifft das Gebiet der Ultraschallsensorik für Fahrzeuge und speziell einen Ultraschallsendeempfänger für ein Fahrzeug und ein Herstellungsverfahren dafür.

Bekannt sind Ultraschallsendeempfänger mit einem Gehäuse, einer an einer Öffnung des Gehäuses montierten Ultraschallmembran, einem auf die Ultraschallmembran geklebten Schallwandlerelement und einer Leiterplatte mit Elektronik zur Ansteuerung des Schallwandlerelements, die mittels Kontaktelementen mit dem Schallwandlerelement kontaktiert ist.

Ein derartiger Ultraschallsendeempfänger kann zur Messung einer Distanz zu einem Hindernis im Fahrzeugumfeld nach dem Puls-Echo-Verfahren verwendet werden. Dabei sendet die Ultraschallmembran, angeregt von dem Schallwandlerelement, Energie in Form eines Ultraschallsignals aus. Sodann erfasst das Schallwandlerelement Schwingungen der Ultraschallmembran, die von einem aus dem Fahrzeugumfeld zurücklaufenden Echosignal herrühren. Anhand der Signallaufzeit wird die Distanz zu einem Hindernis bestimmt. Derartige Messungen werden beispielsweise von einem Parkassistenzsystem des Fahrzeugs verwendet.

Ein Teil der ausgesendeten Ultraschall-Energie wird ins Innere des Gehäuses abgestrahlt und regt dieses zu unerwünschten Strukturschwingungen an, die zur Erfassung von Fehl- oder Geisterechos führen. Während der Ausschwingzeit der Strukturschwingungen ist daher keine sinnvolle Messung möglich. Die Distanzmessung kann somit einen Blindbereich bis in den hohen Dezimeterbereich aufweisen.

Zur Verbesserung der Strukturdynamik eines Ultraschallsendeempfängers können die elektrischen Kontaktelemente in dem Kunststoffgehäuse umspritzt werden. Dies erfordert ein komplexes Spritzgusswerkzeug und verschlechtert die Zugänglichkeit beim elektrischen Kontaktieren der Kontaktelemente mit dem Schallwandlerelement. Die Kontaktelemente können auch im Gehäuse verpresst werden. Bei dieser Technik sind weitere Maßnahmen, wie ein Komplettverguss des Gehäuses, zur Steigerung der Belastbarkeit erforderlich.

EP 1 260 965 A2, DE 38 26 799 A1, DE 10 2005 009 620 A1, DE 10 2017 109 159 A1 und US 2018/056901 A1 sind Beispiele für Ultraschallsendeempfänger aus dem Stand der Technik.

Vor diesem Hintergrund liegt der vorliegenden Erfindung als Aufgabe zugrunde, einen verbesserten Ultraschallsendeempfänger und ein verbessertes Herstellungsverfahren dafür bereitzustellen.

Gemäß einem ersten Aspekt wird ein Ultraschallsendeempfänger für ein Fahrzeug vorgeschlagen, der ein Kunststoffgehäuse, eine Ultraschallmembran, ein Schallwandlerelement zur Schwingungsanregung und Schwingungserfassung der Ultraschallmembran und ein im Innenraum des Kunststoffgehäuses angeordnetes, elektrisch leitendes Kontaktelement zur elektrischen Kontaktierung des Schallwandlerelements aufweist, wobei das Kunststoffgehäuse und das Kontaktelement durch Verstemmen mindestens eines einstückig mit dem Kunststoffgehäuse ausgebildeten Kunststoffelements unmittelbar und formschlüssig miteinander verbunden sind.

Der vorgeschlagene Ultraschallsendeempfänger kann vorteilhafterweise eine verbesserte Strukturdynamik aufweisen. Mit der vorgeschlagenen Art der Verbindung durch Verstemmen des Kunststoffgehäuses (eines einstückig mit dem Kunststoffgehäuse ausgebildeten Kunststoffelements) im Bereich des Kontaktelements können das Kontaktelement und das Kunststoffgehäuse vorteilhafterweise eine starre Einheit ausbilden, die Schwingungsenergie besser absorbieren kann. Versuche der Erfinder haben gezeigt, dass eine kürzere Ausschwingzeit von Strukturschwingungen und damit eine kürzere Blindzeit der Distanzmessung erzielt werden kann. Ferner können die Lebensdauer des Ultraschallsendeempfängers sowie die Langzeitstabilität der Ausschwingzeit erhöht werden. Ferner kann vorteilhafterweise unter Erhalt der vorgenannten Vorteile ganz oder teilweise auf einen Verguss des Kunststoffgehäuses mit Silikonschaum oder dergleichen verzichtet werden, wodurch die Masse des Ultraschallsendeempfängers gesenkt werden kann, was zu einer weiteren Verkürzung der Ausschwingzeit und Verbesserung der Strukturdynamik des Ultraschallsendeempfängers führt.

Das Fahrzeug kann insbesondere ein Kraftfahrzeug, wie ein Personenfahrzeug oder ein Lastkraftwagen, sein. Das Fahrzeug kann insbesondere mit einem Fahrassistenzsystem und/oder einem Parkassistenzsystem ausgerüstet sein.

Unter "Verstemmen" (engl. "heat staking") ist insbesondere ein thermoplastisches Warm- bzw. Heißverstemmen zu verstehen. Insbesondere ist unter "Verstemmen" ein Vorgang zu verstehen, bei dem ein Abschnitt des Kunststoffelements unter Wärmezufuhr thermoplastisch verformt wird und dabei unter Einwirkung eines Stemmmittels eine mindestens formschlüssige, vorzugsweise kraftschlüssige, Verbindung zwischen dem Kunststoffgehäuse bzw. dem verformten Kunststoffelement und dem Kontaktelement geschaffen wird. Das Stemmmittel kann ein Stempel sein. Weitere Beispiele für ein Stemmmittel sind Laserstrahlung oder Infrarotstrahlung.

Das Kunststoffelement ist einstückig mit dem Kunststoffgehäuse ausgebildet. Insbesondere sind das Kunststoffelement und das Kunststoffgehäuse durch Urformen, wie beispielsweise Spritzgießen, in einem Arbeitsgang als ein durchgängiges Element ausgebildet. Das Kunststoffelement ist insbesondere im Innenraum des Kunststoffgehäuses angeordnet. Das Kunststoffelement kann als ein Abschnitt des Kunststoffgehäuses betrachtet werden. Insbesondere kann vorliegend von "Verstemmen des Kunststoffgehäuses" oder "Verstemmen eines Abschnitts des Kunststoffgehäuses" gesprochen werden, womit ein "Verstemmen des Kunststoffelements" bzw. eines Abschnitts desselben gemeint sein kann

Das Kunststoffelement kann beispielsweise ein nach innen ragender Vorsprung des Kunststoffgehäuses sein, wie beispielsweise ein Kunststoffdom oder dergleichen.

Unter "formschlüssig verbunden" ist vorliegend eine Verbindung durch Ineinander- oder Hintergreifen mindestens zweier Verbindungspartner zu verstehen.

Unter "unmittelbar verbunden" ist vorliegend zu verstehen, dass kein von den Verbindungspartnern verschiedenes weiteres Verbindungselement, wie eine Schraube oder dergleichen, zur Verbindung verwendet wird.

Insbesondere sind das Kunststoffgehäuse (ein Verbindungspartner) und das Kontaktelement (anderer Verbindungspartner) dadurch unmittelbar verbunden, dass das Kunststoffgehäuse (das einteilig damit ausgebildete Kunststoffelement) geeignet verstemmt ist.

Das Schallwandlerelement kann insbesondere ein Piezoelement oder ein Ultraschall-Transducer sein. Das Schallwandlerelement kann auf die Ultraschallemembran geklebt, mit dieser verschweißt oder auf andere Weise mit der Ultraschallmembran verbunden sein.

Unter "Kontaktelement zur elektrischen Kontaktierung des Schallwandlerelements" ist insbesondere zu verstehen, dass an das Kontaktelement ein elektrisches Signal angelegt werden kann, um das Schallwandlerelement dazu zu veranlassen, die Ultraschallmembran zu Schwingungen anzuregen, um ein Ultraschallsignal auszusenden, und/oder, dass an dem Kontaktelement ein elektrisches Signal bezogen werden kann, welches für von dem Schallwandlerelement erfasste Schwingungen der Ultraschallmembran indikativ ist, um ein reflektiertes Echosignal zu erfassen. Das Kontaktelement kann direkt oder indirekt mit dem Schallwandlerelement kontaktiert sein. Insbesondere wird aus Gründen der Schallentkopplung ein indirekter Kontakt mit dem Schallwandlerelement bevorzugt. Das Kontaktelement kann einen oder mehrere Abschnitte umfassen, die als Kontaktstift, Leiterelement, Leiterschiene und dergleichen ausgebildet sein können. Das Kontaktelement kann insbesondere ein metallisches Element sein.

Der Begriff "ein" ist vorliegend, sofern nicht anders angegeben, nicht auf die Auslegung "genau ein" eingeschränkt, und kann insbesondere auch die Bedeutung "mehrere" umfassen. Insbesondere versteht sich, dass in dem Kunststoffgehäuse auch zwei oder mehr Kontaktelemente vorgesehen sein können, die jeweils auf gleiche Weise, wie für das "eine" Kontaktelemente beschrieben, mit dem Kunststoffgehäuse verbunden sein können.

Gemäß einer Ausführungsform besteht zwischen dem Kunststoffgehäuse und dem Kontaktelement eine Zwängung.

Somit ist die durch Verstemmen des mindestens einen Kunststoffelements hergestellte Verbindung zwischen Kunststoffgehäuse und Kontaktelement vorzugsweise nicht nur formschlüssig, sondern auch kraftschlüssig. Insbesondere wirkt eine Normalkraft auf die miteinander zu verbindenden Flächen des Kunststoffgehäuses bzw. des Kunststoffelements und des Kontaktelements. Insbesondere ist die Verbindung zwischen Kunststoffgehäuse und Kontaktelement statisch überbestimmt. Die Stärke der Zwängung kann unter Berücksichtigung der im Betrieb zu erwartenden Vibrationen aufgrund ausgesandter und empfangener Ultraschallsignale, Fahrbewegungen des Fahrzeugs und dergleichen gewählt werden. Das Vorliegen einer geeigneten Zwängung kann durch einen Abziehtest überprüft werden. Die Güte der Verstemmung kann aus den Parametern der Verstemmaschine überwacht werden. Auch ist möglich die Güte der Verstemmung mit einer Kamera optisch zu prüfen.

Gemäß einer Ausführungsform ist das Kontaktelement ein starres Element, und ein elektrischer Kontakt zwischen dem Kontaktelement und dem Schallwandlerelement ist über ein flexibles Zwischenelement hergestellt.

Das heißt, gemäß der vorliegenden Ausführungsform kontaktiert das Kontaktelement das Schallwandlerelement indirekt über das Zwischenelement. Das flexible Zwischenelement ist mindestens flexibler als das starre Kontaktelement. Das flexible Zwischenelement kann ein geringeres Gewicht und einen geringeren Querschnitt als das starre Kontaktelement aufweisen. Das flexible Zwischenelement kann vorzugsweise ein Draht sein. Der Draht kann länger gewählt sein als ein Abstand zwischen dem Kontaktelement und dem Schallwandlerelement, und kann demgemäß nicht straff gespannt sein.

Auf diese Weise kann vorteilhafterweise das starre Kontaktelement von der schwingenden Ultraschallmembran akustisch entkoppelt werden.

Gemäß einer Ausführungsform umfasst das mindestens eine verstemmte Kunststoffelement einen Vorsprung, der von dem Kunststoffgehäuse nach innen ragt, durch eine Durchgangsöffnung in dem Kontaktelement verläuft, und dessen freies Kopfende dergestalt verstemmt ist, dass es das Kontaktelement formschlüssig hintergreift.

Unter "freiem Kopfende" des Vorsprungs ist insbesondere ein von dem Kunststoffgehäuse entfernte Endes des Vorsprungs zu verstehen.

Bei der Herstellung des vorgeschlagenen Ultraschallsendeempfängers ermöglicht die vorliegende Ausführungsform vorteilhafterweise ein exaktes Positionieren des Kontaktelements. Der Vorsprung kann in die Durchgangsöffnung eingeführt werden, und anschließend kann das freie Kopfende durch Verstemmen beispielsweise pilzkopfförmig aufgeweitet werden. Somit kann ein stabiler formschlüssiger Sitz des Kontaktelements zwischen dem verstemmten freien Kopfende des Vorsprungs und dem Kunststoffgehäuse erzielt werden.

Gemäß einer weiteren Ausführungsform umfasst das mindestens eine verstemmte Kunststoffelement mindestens zwei Vorsprünge, die von dem Kunststoffgehäuse nach innen ragen, wobei das Kontaktelement zwischen den mindestens zwei Vorsprüngen angeordnet ist, und wobei die freien Kopfenden der Vorsprünge dergestalt verstemmt sind, dass sie das Kontaktelement formschlüssig hintergreifen.

Unter "freiem Kopfende" eines jeweiligen Vorsprungs ist insbesondere das von dem Kunststoffgehäuse entfernte Ende des Vorsprungs zu verstehen.

Bei der Herstellung des vorgeschlagenen Ultraschallsendeempfängers kann die vorliegende Ausführungsform ein exaktes Positionieren des Kontaktelements zwischen den beiden Vorsprüngen ermöglichen. Das Kontaktelement kann zwischen die beiden Vorsprünge gelegt werden und anschließend können deren freien Kopfende durch Verstemmen aufgeweitet werden. Somit kann ein stabiler Sitz des Kontaktelements zwischen den verstemmten freien Kopfenden der beiden Vorsprünge und dem Kunststoffgehäuse erzielt werden.

Gemäß einer weiteren Ausführungsform umfasst das Kontaktelement einen schienenförmigen Abschnitt, und die unmittelbare formschlüssige Verbindung ist zwischen dem verstemmten Kunststoffelement und dem schienenförmigen Abschnitt hergestellt.

Der schienenförmige Abschnitt kann auf einer Innenoberfläche des Kunststoffgehäuses aufliegen und formschlüssig zwischen der Innenoberfläche des Kunststoffgehäuses und dem mindestens einen verstemmten Kunststoffelement eingefasst sein.

Gemäß einer weiteren Ausführungsform umfasst das Kontaktelement einen stiftförmigen Abschnitt, und eine Leiterplatte mit mindestens einem elektronischen Bauelement zum Ansteuern des Schallwandlerelements ist auf den stiftförmigen Abschnitt gesteckt.

Dank der durch Verstemmen hergestellten unmittelbaren formschlüssigen Verbindung zwischen dem durch das Zwischenelement akustisch entkoppelten Kontaktelement und Kunststoffgehäuse ist vorteilhafterweise zwischen der Leiterplatte und dem stiftförmigen Abschnitt des Kontaktelements eine Steckverbindung ausreichend. Die Steckverbindung braucht nicht vergossen zu werden. Somit kann vorteilhafterweise die Montage und ggf. die Reparatur bzw. der Austausch der Leiterplatte vereinfacht werden.

Gemäß einer weiteren Ausführungsform verläuft die Leiterplatte parallel zu der Ultraschallmembran, ein Volumen des Innenraums des Kunststoffgehäuses auf einer der Ultraschallmembran zugewandten Seite der Leiterplatte ist mit einem Schaum vergossen, und ein Volumen des Innenraums auf einer der Ultraschallmembran abgewandten Seite der Leiterplatte ist frei von Schaumverguss.

Der Schaum kann beispielsweise ein Silikonschaum sein. Das Volumen des Innenraums des Kunststoffgehäuses auf der der Ultraschallmembran zugewandten Seite kann ganz oder teilweise mit dem Schaum vergossen sein. Insbesondere kann ein Volumenbereich des Innenraums des Kunststoffgehäuses mit Schaum vergossen sein, der an die Ultraschallmembran angrenzt. Somit kann die Ultraschallmembran vorteilhaft gedämpft werden.

Gleichzeitig ist mindestens ein Volumenbereich des Kunststoffbereichs auf der der Ultraschallmembran abgewandten Seite der Leiterplatte frei von Schaum. Optional ist auch ein Teil eines Volumenbereichs auf der der Ultraschallmembran zugewandten Seite frei von Schaum. Insbesondere ist es gemäß der vorgeschlagenen Lösung nicht erforderlich, die Verbindung zwischen Leiterplatte und stiftförmigem Abschnitt des Kontaktelements zu vergießen. Ebenso ist es nicht notwendigerweise erforderlich, die Verbindung zwischen dem schienenförmigen Abschnitt des Kontaktelements und dem Kunststoffgehäuse zu vergießen.

Es kann somit vorteilhafterweise Vergussmasse eingespart und die Masse des Ultraschallsendeempfängers verringert werden. Dies kann sich vorteilhaft auf die Strukturdynamik und insbesondere auf die Ausschwingzeit des Ultraschallsendeempfängers auswirken.

Gemäß einem zweiten Aspekt wird ein Verfahren zum Herstellen eines Ultraschallsendeempfängers für ein Fahrzeug vorgeschlagen. Das Verfahren umfasst die Schritte: Ausbilden eines Kunststoffgehäuses mit mindestens einem einstückig mit dem Kunststoffgehäuse ausgebildeten Kunststoffelement; Befestigen einer Ultraschallmembran mit einem Schallwandlerelement zur Schwingungsanregung und Schwingungserfassung der Ultraschallmembran an dem Kunststoffgehäuse; Anordnen eines elektrisch leitenden Kontaktelements im Innenraum des Kunststoffgehäuses; Kontaktieren des Kontaktelements mit dem Schallwandlerelement; und unmittelbares und formschlüssiges Verbinden des Kunststoffgehäuses mit dem Kontaktelement durch Verstemmen des mindestens einen einstückig mit dem Kunststoffgehäuse ausgebildeten Kunststoffelements.

Die vorstehend für den Ultraschallsendeempfänger des ersten Aspekts beschriebenen Merkmale, Vorteile, Definitionen und Ausführungsformen gelten entsprechend auch für das Herstellungsverfahren des zweiten Aspekts. Die nachstehend für das Herstellungsverfahren des zweiten Aspekts beschriebenen Merkmale, Vorteile, Definitionen und Ausführungsformen gelten entsprechend auch für den Ultraschallsendeempfänger des ersten Aspekts.

Das vorgeschlagene Herstellungsverfahren kann vorteilhafterweise eine verbesserte Zugänglichkeit bieten und dadurch die Montage vereinfachen. So kann ein Spritzgusswerkzeug zum Urformen des Kunststoffgehäuses kompakter und einfacher gestaltet sein, und das Kontaktieren des Kontaktelements mit dem Schallwandlerelement kann mindestens teilweise unter erheblich mehr Bewegungsfreiheit bereits vor dem Anordnen des Kontaktelements im Kunststoffgehäuse und vor dem Verbinden des Kunststoffgehäuses mit dem Kontaktelement erfolgen. Beispielsweise kann ein Draht als Zwischenelement bereits vor dem Anordnen des Kontaktelements in dem Kunststoffgehäuse mit dem Kontaktelement verlötet werden.

Das Ausbilden des Kunststoffgehäuses mit dem einstückig damit ausgebildeten Kunststoffelement kann ein Urformen, wie zum Beispiel Spritzgießen, in einem Arbeitsgang umfassen.

Das Befestigen der Ultraschallmembran mit dem Schallwandlerelement kann insbesondere folgende Schritte umfassen: Kleben des Schallwandlerelements auf die Ultraschallmembran; und Montieren der Ultraschallmembran mit dem Schallwandlerelement an dem Gehäuse.

Das Anordnen des Kontaktelements kann insbesondere ein Legen des Kontaktelements auf eine Innenoberfläche des Kunststoffgehäuses umfassen.

Das Kontaktieren des Kontaktelements mit dem Schallwandlerelement kann insbesondere ein Löten umfassen.

Das Verstemmen des mindestens einen Kunststoffelements kann insbesondere ein thermoplastisches Verformen des mindestens einen Kunststoffelements unter Wärmezufuhr umfassen, dergestalt, dass nach Abkühlung des Kunststoffs eine formschlüssige Verbindung zwischen dem Kunststoffgehäuse, dem verstemmten Kunststoffelement und dem Kontaktelement besteht.

Gemäß einer Ausführungsform wird das Kunststoffgehäuse einstückig mit dem mindestens einem Kunststoffelement ausgebildet, das mindestens einen Vorsprung umfasst, der von dem Kunststoffgehäuse nach innen ragt und an seinem freien Kopfende eine Einführschräge aufweist, und das Kontaktelement wird beim Anordnen in dem Innenraum des Kunststoffgehäuses von der Einführschräge geführt und positioniert.

Beispielsweise kann die Einführschräge durch eine abgeschrägte obere Kante eines quaderförmigen Vorsprungs gebildet sein. Die Einführschräge kann auch durch eine konische Spitze eines zylinderförmigen Vorsprungs gebildet sein.

Die Einführschräge kann vorteilhafterweise das Positionieren des Kunststoffelements beim vorzugsweise automatisch ausgeführten Anordnen in dem Kunststoffgehäuse unterstützen.

Gemäß einer Ausführungsform umfasst das mindestens eine einstückig mit dem Kunststoffgehäuse ausgebildete Kunststoffelement mehrere Vorsprünge, die von dem Kunststoffgehäuse nach innen ragen, an ihren freien Kopfenden eine jeweilige Einführschräge aufweisen und gemeinsam eine Tasche ausbilden, wobei das Anordnen des elektrisch leitenden Kontaktelements im Innenraum des Kunststoffgehäuses ein Einlegen des Kontaktelements in die Tasche umfasst, wobei das Kontaktelement beim Einlegen von den Einführschrägen geführt und positioniert wird.

Unter einer "Tasche" ist insbesondere ein im Wesentlichen quaderförmiges Volumen zu verstehen, das durch das Kunststoffgehäuse und die jeweiligen Vorsprünge definiert ist und passgenau konform zu den in die Tasche einzulegenden Kontaktelementen ausgebildet ist. Das als "Tasche" bezeichnete Volumen ist nicht notwendigerweise vollständig von Kunststoffelementen umgeben, sondern kann an jeder seiner Seiten Lücken aufweisen.

Beim Herstellen des Ultraschallsendeempfängers kann auf diese Weise das Kontaktelement auf einfache Weise, insbesondere automatisch durch einen Roboterarm, in die von den Vorsprüngen gebildete Tasche eingelegt und dabei von den Einführschrägen an den freien Kopfenden der Vorsprünge automatisch und vorzugsweise in allen Freiheitsgraden mit Ausnahme der Richtung des Einlegens exakt positioniert werden.

Gemäß einer weiteren Ausführungsform ist das Kontaktelement ein starres Element, und ein elektrischer Kontakt zwischen dem Kontaktelement und dem Schallwandlerelement wird über ein flexibles Zwischenelement hergestellt.

Demgemäß kann vorteilhafterweise das Kontaktelement akustisch von dem Schallwandlerelement und damit auch von der Ultraschallmembran entkoppelt werden.

Gemäß einer weiteren Ausführungsform umfasst das Kontaktieren des Kontaktelements mit dem Schallwandlerelement ein Verlöten oder Verscheißen eines Endes des flexiblen Zwischenelements mit dem Kontaktelement vor dem Anordnen des Kontaktelements in dem Kunststoffgehäuse und ein Verlöten oder Verscheißen des anderen Endes des flexiblen Zwischenelements mit dem Schallwandlerelement nach dem Anordnen des Kontaktelements in dem Kunststoffgehäuse.

Da das Verbinden des Kontaktelements mit dem Kunststoffgehäuse durch Verstemmen eines Kunststoffelements erfolgt, kann das Verlöten bzw. das Verschweißen mindestens des einen Endes des flexiblen Zwischenelements schon vor dem Anordnen des Kontaktelements erfolgen, wo vorteilhafterweise mehr Bewegungsfreiheit besteht, was ein exakteres Arbeiten ermöglicht.

Gemäß einer weiteren Ausführungsform erfolgen das Verlöten oder das Verschweißen des anderen Endes des flexiblen Zwischenelements mit dem Schallwandlerelement und das Verstemmen des mindestens einen Kunststoffelements gleichzeitig in einem Arbeitsgang.

Gemäß einer weiteren Ausführungsform umfasst das Kontaktieren des Kontaktelements mit dem Schallwandlerelement ein Verlöten oder Verscheißen eines Endes des flexiblen Zwischenelements mit dem Kontaktelement und ein Verlöten oder Verscheißen des anderen Endes des flexiblen Zwischenelements mit dem Schallwandlerelement nach dem Verstemmen des Kunststoffelements zur Verbindung des Kontaktelements mit dem Kunststoffgehäuse.

Das vorgeschlagene Verbinden von Kontaktelement und Kunststoffgehäuse durch Verstemmen macht die Verwendung komplexer Spritzgusswerkzeuge oder dergleichen überflüssig und kann platzsparend erfolgen, so dass gleichzeitig mit einem Stempel zum Verstemmen auch ein Lötwerkzeug in das Kunststoffgehäuse eingebracht werden oder ein Kombiwerkzeug zum Löten und zum Verstemmen benutzt werden kann. Der Energie- und Zeitaufwand bei der Montage des Ultraschallsendeempfängers kann so vorteilhaft verringert werden.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsbeispielen unter Bezugnahme auf die beigefügten Figuren näher erläutert.
- Fig. 1: zeigt eine schematische Schnittansicht eines Ultraschallsendeempfängers gemäß einem ersten Ausführungsbeispiel;
- Fig. 2: zeigt einen perspektivischen Ausschnitt eines Kunststoffgehäuses vor dem Einlegen und Verbinden der Kontaktelemente gemäß einem zweiten Ausführungsbeispiel;
- Fig. 3: zeigt einen perspektivischen Ausschnitt des Kunststoffgehäuses aus Fig. 2 mit eingelegten Kontaktelementen;
- Fig. 4: zeigt einen perspektivischen Ausschnitt des Kunststoffgehäuses aus Fig. 3 nach dem Verstemmen; und
- Fig. 5: zeigt Schritte eines Herstellungsverfahrens gemäß einem Ausführungsbeispiel.

In den Figuren sind gleiche oder funktionsgleiche Elemente mit denselben Bezugszeichen versehen worden, sofern nichts anderes angegeben ist.

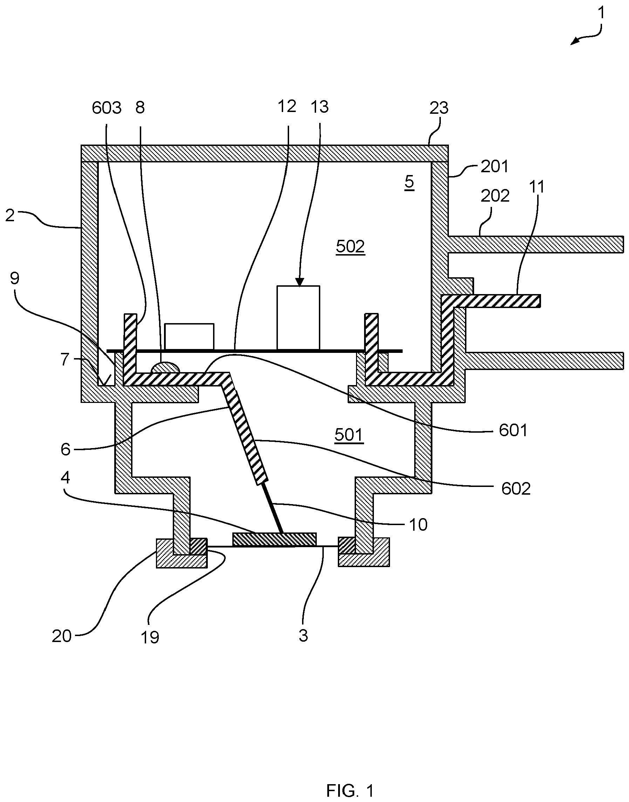

Fig. 1 zeigt eine schematische und nicht maßstabsgetreue Schnittansicht eines Ultraschallsendeempfängers 1 gemäß einem ersten Ausführungsbeispiel.

Der Ultraschallsendeempfänger 1 umfasst ein Kunststoffgehäuse 2. In einer offenen Unterseite des Kunststoffgehäuses 2 ist eine Ultraschallmembran 3 zum Aussenden und Empfangen von Ultraschallsignalen montiert. Auf die Ultraschallmembran 3 ist ein Piezoelement 4 (Beispiel für ein Schallwandlerelement) geklebt. Das Piezoelement 4 ist dazu eingerichtet, gesteuert von einem elektrischen Signal die Ultraschallmembran 3 zu Schwingungen anzuregen, und ist dazu eingerichtet, Schwingungen der Ultraschallmembran 3 zu erfassen und in ein elektrisches Signal zu wandeln. Im Innenraum 5 des Kunststoffgehäuses 2 ist ein elektrisch leitendes Kontaktelement 6 zur Kontaktierung des Piezoelements 4 angeordnet. Ein horizontaler Abschnitt 601 des Kontaktelements 6 ruht auf einer Innenoberfläche 7 des Kunststoffgehäuses 2. Das Kontaktelement 6 (der horizontale Abschnitt 601) ist dadurch unmittelbar und formschlüssig mit dem Kunststoffgehäuse 2 verbunden, dass ein freies Kopfende eines Kunststoffelements 8, das einstückig mit dem Kunststoffgehäuse 2 ausgebildet ist, verstemmt ist (in Fig. 1 durch eine beispielhafte Pilzkopfform angedeutet).

Es sei angemerkt, dass das Kunststoffelement 8 ebenfalls als Abschnitt des Kunststoffgehäuses 2 angesehen wird, da es einstückig mit dem Kunststoffgehäuse 2 ausgebildet ist. Anders ausgedrückt ist das Kunststoffgehäuse 2 in einem Bereich des Kontaktelements 6 dergestalt verstemmt, dass Abschnitte 7, 8 des Kunststoffgehäuses 2 und das Kontaktelement 6 unmittelbar und formschlüssig miteinander verbunden sind.

Der Ultraschallsendeempfänger 1 weist eine vorteilhafte Strukturdynamik, eine verringerte Abklingzeit von Strukturschwingungen, eine erhöhte Lebensdauer und eine höhere Langzeitstabilität der Abklingzeit auf.

Weiter unter Bezugnahme auf Fig. 1 werden vorteilhafte Ausgestaltungen und Weiterbildungen des Ultraschallsendeempfängers 1 beschreiben.

Insbesondere besteht zwischen dem Kunststoffgehäuse 2, insbesondere zwischen der Innenoberfläche 7 und dem verstemmten freien Ende des Kunststoffelements 8, und dem Kontaktelement 6 (Abschnitt 601), eine Zwängung. Zum einen kann es aufgrund von Fertigungstoleranzen schwierig sein, eine statische Bestimmtheit der Verbindung zwischen Kunststoffgehäuse 2 und Kontaktelement 6 zu erreichen. Durch Wahl einer zumindest geringfügigen Zwängung lässt sich eine statische Überbestimmtheit sicherstellen. Zum anderen kann somit die Verbindung zwischen Kunststoffgehäuse 2 und Kontaktelement 6 nicht nur formschlüssig, sondern auch kraftschlüssig ausgebildet sein.

Insbesondere ist das zumindest formschlüssig mit dem Kunststoffgehäuse 2 verbundene Kontaktelement 6 nicht direkt mit dem Piezoelement 4 verbunden. Zwischen dem starren Kontaktelement 6 und dem Piezoelement 4 ist ein flexibler, dünner Draht 10 (Beispiel für ein Zwischenelement) angeordnet. Der Draht 10 dient der akustischen Entkopplung des Kontaktelements 6 von der Ultraschallmembran 3.

Insbesondere ist die Ultraschallmembran 3 nicht direkt mit dem Kunststoffgehäuse 2 verbunden. Die Ultraschallmembran 3 ist beispielsweise in einem Entkopplungsring 19 (auch als "Plug" bezeichnet) angebracht. Die Baugruppe aus Ultraschallmembran 3, Piezoelement 4 und Entkopplungsring 19 ist innenliegend in einer offenen Seite des Kunststoffgehäuses 2 angeordnet und mittels eines außenliegenden ringförmigen Deckels 20 an dem Kunststoffgehäuse 2 montiert. Die Verbindung von Deckel 20 und Kunststoffgehäuse 2 kann laserverschweißt sein. Dergestalt kann eine akustische Entkopplung des Kunststoffgehäuses 2 von der Ultraschallmembran 3 mit dem Piezoelement 4 erzielt werden.

Insbesondere ist der mit dem Kunststoffgehäuse 2 formschlüssig verbundene horizontale Abschnitt 601 ein Leiterschienenabschnitt (schienenförmiger Abschnitt), der flach auf der Innenoberfläche 7 des Kunststoffgehäuses 2 aufliegt. Außerdem umfasst das Kontaktelement 6 einen weiteren Leiterschienenabschnitt 602, der schräg nach unten in Richtung des Piezoelements 4 verläuft. Außerdem umfasst das Kontaktelement 6 einen Kontaktstiftabschnitt 603 (stiftförmiger Abschnitt), der im Wesentlichen orthogonal zu dem Leiterschienenabschnitt 601 nach oben verläuft. Der vertikal nach oben verlaufende Kontaktstiftabschnitt 603 liegt passgenau an einem nicht verstemmten, einstückig mit dem Kunststoffgehäuse 2 ausgebildeten und nach innen ragenden Vorsprung 9 an.

Mit "unten" wird vorliegend eine Richtung entlang einer Hauptachse des Ultraschallsendeempfängers 1 bezeichnet, entlang derer Ultraschallsignale ausgesendet werden können, und mit "oben" entsprechend die entgegengesetzte Richtung. Es versteht sich, dass der Ultraschallsendeempfänger 1 in jeder beliebigen Orientierung an einem Fahrzeug montiert werden kann und weder bei der Herstellung des Ultraschallsendeempfängers 1 noch im Betrieb des Ultraschallsendeempfängers 1 die Richtung nach "unten" notwendigerweise oder vorzugsweise mit einer Schwerkraftrichtung übereinzustimmen braucht.

Insbesondere weist der Ultraschallsendeempfänger 2 einen weiteren Kontaktstift 11 zum externen Kontaktieren auf, der aus einem Hauptgehäuseabschnitt 201 des Kunststoffgehäuses 2 in einen Kupplungsgehäuseabschnitt 202 des Kunststoffgehäuses 2 geführt ist und der externen Kontaktierung dient. Ein Abschnitt des weiteren Kontaktstifts 11 ragt im Hauptgehäuseabschnitt 201 des Kunststoffgehäuses auf einer dem Kontaktstiftabschnitt 603 des Kontaktelements 6 gegenüberliegenden Seite und parallel zu diesem vertikal nach oben.

Eine Leiterplatte 12 ist von oben auf den Kontaktstiftabschnitt 603 des Kontaktelements 6 zur Kontaktierung des Piezoelements 4 und auf den vertikalen Abschnitt des weiteren Kontaktstifts 11 zur externen Kontaktierung gesteckt. Auf der Leiterplatte 12 sind ein oder mehrere elektronische Bauelemente 13 zum Ansteuern des Piezoelements 4 angeordnet.

Insbesondere kann vorzugsweise ein Volumen 501 des Innenraums 5 des Kunststoffgehäuses 2 auf einer der Ultraschallmembran 3 zugewandten Seite der Leiterplatte 12 zumindest teilweise mit einem Silikonschaum vergossen sein. Besonders bevorzugt kann das Volumen 501 ausgehend von der Ultraschallmembran 3 bis zu einer Höhe mit dem Silikonschaum vergossen sein, die ausreichend ist, um für eine ausreichende Dämpfung der Ultraschallmembran 3 zu sorgen, aber unterhalb der Leiterplatte 12 liegt. Insbesondere ist es vorteilhafterweise nicht erforderlich, die durch Verstemmen gebildete Verbindung zwischen dem Leiterschienenabschnitt 601 des Kontaktelements 6 und dem verstemmten Kunststoffelement 8 mit dem Silikonschaum zu vergießen. Ebenfalls ist es nicht erforderlich, die Steckverbindung zwischen dem Kontaktstiftabschnitt 603 des Kontaktelements 6 und der Leiterplatte 12 mit dem Silikonschaum zu vergießen. Insbesondere ist ein Volumen 502 auf einer der Ultraschallmembran 3 abgewandten Seite der Leiterplatte 12 frei von Schaumverguss. Auf diese Weise kann somit vorteilhafterweise die Menge an verwendetem Silikonschaum im Vergleich zu einem vollständigen Vergießen des Kunststoffgehäuses 2 auf das zur Dämpfung der Ultraschallmembran 3 notwendige Mindestmaß reduziert werden. Dadurch kann die Gesamtmasse des Ultraschallsendeempfängers 1 verringert werden, was sich vorteilhaft auf die Strukturdynamik und die Abklingzeit von Strukturschwingungen auswirken kann.

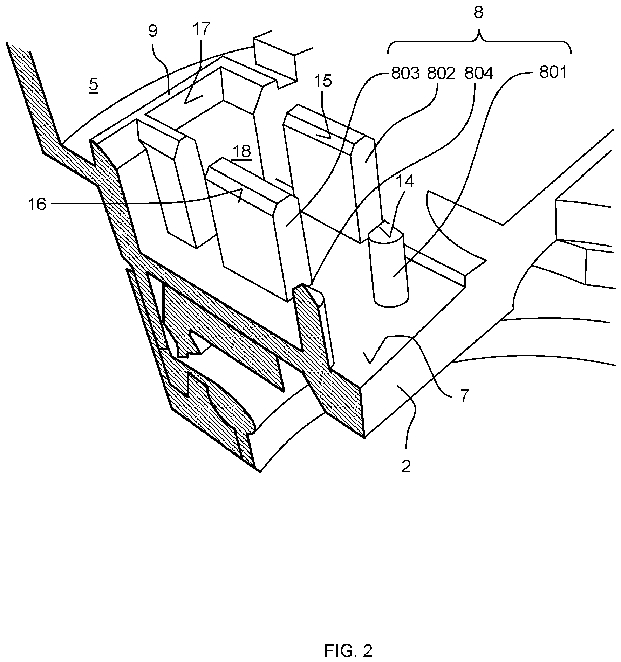

Im Folgenden werden anhand der Fig. 2 bis 5 ein Herstellungsverfahren für einen Ultraschallsendeempfänger 1 sowie ein Ultraschallsendeempfänger 1 gemäß einem zweiten Ausführungsbeispiel beschrieben. Das zweite Ausführungsbeispiel ist mit dem ersten Ausführungsbeispiel kompatibel. Gleiche Elemente tragen gleiche Bezugszeichen und werden nicht erneut beschrieben.

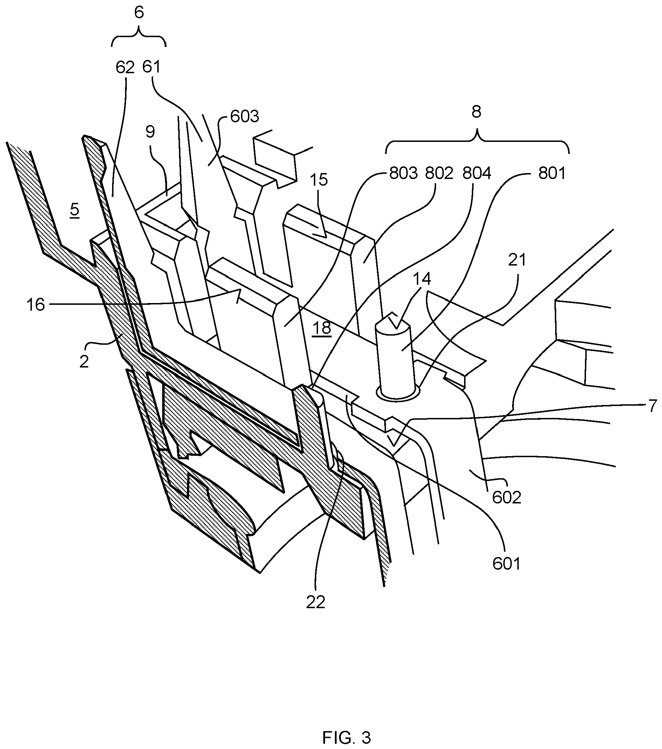

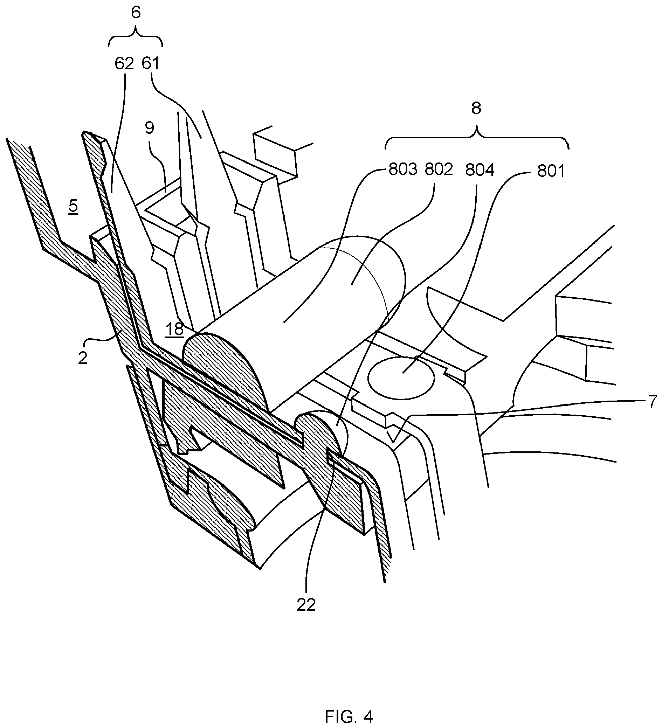

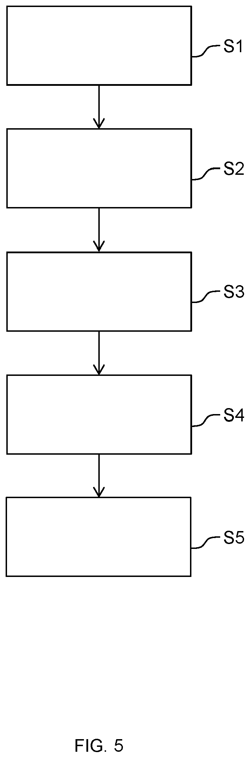

Fig. 2, 3 und 4 zeigen perspektivische und im Wesentlichen maßstabsgetreue Ausschnitte eines Kunststoffgehäuses 2 vor dem Einlegen und Verbinden der Kontaktelemente 61, 62 (Fig. 2); mit eingelegten Kontaktelementen 61, 62 (fig. 3) bzw. nach dem Verstemmen (Fig. 4). Fig. 5 veranschaulicht Schritte eines Herstellungsverfahrens.

In Schritt S1 wird das Kunststoffgehäuse 2 in einem Spritzgussvorgang einstückig ausgebildet. Das Kunststoffgehäuse 2 weist eine Innenoberfläche 7 auf, von der einstückig mit dem Kunststoffgehäuse 2 ausgebildete Vorsprünge 8 und 9 vertikal nach innen ragen. Die Vorsprünge 801, 802, 803, 804 sind Beispiele für das mindestens eine zu verstemmende Kunststoffelement 8. Der Vorsprung 9 ist ein nicht zu verstemmender Vorsprung.

Jeder der Vorsprünge 8, 9 weist an seinem an seinem freien Kopfende (dem von der Innenoberfläche 7 des Kunststoffgehäuses entfernten Ende) eine jeweilige Einführschräge 14-17 auf. Im Speziellen weist der säulenförmige Vorsprung 801 eine konische Spitze auf, die als Einführschräge 14 dient. Die wandförmigen (quaderförmigen) Vorsprünge 802 und 803 weisen an ihren freien Kopfenden abgeschrägte Kanten 15, 16 auf, die als jeweilige Einführschrägen dienen. Der wandförmige, nicht zu verstemmende Vorsprung 9 weist an seinem freien Kopfende eine abgeschrägte Kante 17 auf, die als eine Einführschräge dient.

Der säulenförmige Vorsprung 801, die wandförmigen Vorsprünge 802, 803 und der nicht zu verstemmende Vorsprung 9 bilden gemeinsam eine Tasche 18 aus. Die Tasche 18 stellt einen Volumenbereich dar, in den ein Kontaktelement (61 in Fig. 3) eingelegt werden kann und das von unterschiedlichen Kunststoffelementen 7, 9, 14, 15, 18 umgeben ist, die, wie später beschrieben, verstemmt werden, um eine unmittelbare und formschlüssige Verbindung mit dem Kontaktelement 61 herzustellen.

Schritt S2 wird unter Bezug auf Fig. 5 und Fig. 1 beschreiben. In Schritt S2 wird die Ultraschallmembran 3 mit dem Piezoelement 4 an dem Kunststoffgehäuse 2 befestigt. Insbesondere wird das Piezoelement 4 auf die Ultraschallmembran 3 geklebt. Die Ultraschallmembran 3 wird in einem Entkopplungsring 19 angebracht. Die Baugruppe aus Ultraschallmembran 3, Piezoelement 4 und Entkopplungsring 19 wird innenliegend in einer offenen Seite des Kunststoffgehäuses 2 angeordnet und mit einem außenliegenden Deckel 20 von außen an dem Kunststoffgehäuse 2 montiert. Die Verbindung zwischen außenliegendem Deckel 20 und Kunststoffgehäuse 2 wird laserverschweißt.

Es wird nun auf Fig. 3 und 5 Bezug genommen. In Schritt S3 werden die Kontaktelemente 61, 62 in die Tasche 18 eingelegt und dadurch im Innenraum 5 des Kunststoffgehäuses 2 angeordnet. Beim Einlegen wird das Kontaktelement 61 von den Einführschrägen 14-17 geführt und in allen Freiheitsgraden außer der Richtung des Einlegens exakt positioniert.

Beispielhaft wird das Kontaktelement 61 beschrieben. Es versteht sich, dass das Kontaktelement 62 gleichartig aufgebaut ist. Das Kontaktelement 61 weist den vertikal nach oben verlaufenden Kontaktstiftabschnitt 603, den auf der Innenoberfläche 7 des Kunststoffgehäuses 2 ruhenden Leiterschienenabschnitt 601 und den schräg nach unten in Richtung der Ultraschallmembran (3, Fig. 1) verlaufenden Leiterschienenabschnitt 602 auf. Der Leiterschienenabschnitt 601 weist eine Durchgangsöffnung 21 auf, durch welche der säulenförmige Vorsprung 801 nach dem Einlegen des Kontaktelements 61 passgenau hindurch verläuft. Der Leiterschienenabschnitt 601 wird beim Einlegen passgenau zwischen den beiden wandförmigen Vorsprüngen 802 und 803 positioniert. Zudem kommt eine Rückseite des vertikal nach oben verlaufenden Kontaktstiftabschnitts 603 des Kontaktelements 61 passgenau an dem nicht zu verstemmenden Vorsprung 9 zu liegen.

Schritt S4 wird unter Bezug auf Fig. 5 und Fig. 1 beschreiben. In Schritt S4 werden die Kontaktelemente 6 mit dem Piezoelement 4 kontaktiert. Schritt S4 braucht nicht notwendigerweise zeitlich nach Schritt S3 und/oder zeitlich vor Schritt S5 zu erfolgen, sondern kann ganz oder teilweise zu einem oder mehreren anderen Zeitpunkten erfolgen. Beispielsweise kann vorteilhafterweise ein Ende des Drahts 10 bereits vor dem Einlegen in Schritt S3 mit einem Ende des schräg nach unten verlaufenden Abschnitts 602 des jeweiligen Kontaktelements 6 verlötet werden. Nach dem Einlegen in Schritt S3 kann sodann das andere Ende des Drahts 10 mit dem Piezoelement 4 verlötet und dadurch das Kontaktieren des jeweiligen Kontaktelements 6 mit dem Piezoelement 4 abgeschlossen werden. Besonders bevorzugt können das nachstehend beschriebene Heißverstemmen der Vorsprünge 801-804 in Schritt S5 und das Verlöten des Drahts 10 mit dem Piezoelement 4 gleichzeitig in einem Arbeitsgang erfolgen, indem ein Stempel zum Verstemmen und ein Lötwerkzeug gleichzeitig in das Kunststoffgehäuse 2 eingeführt werden oder ein Kombiwerkzeug zum Stemmen und Löten verwendet wird.

Es wird nun auf Fig. 3 bis Fig. 5 Bezug genommen. In Schritt S5 werden die freien Enden der Vorsprünge 801, 802, 803, 804 (Fig. 3) heißverstemmt, und dadurch wird eine unmittelbare und formschlüssige, vorteilhafterweise außerdem kraftschlüssige, Verbindung des Kunststoffgehäuses 2 mit den Kontaktelementen 61, 62 erzielt. Es ergibt sich die in Fig. 4 gezeigte Ausgestaltung. Anhand des zweiten Kontaktelements 62 ist in Fig. 4 zu sehen, dass der säulenförmige Vorsprung 804 durch die Durchgangsöffnung 22 des Kontaktelements 22 ragt und das freie Ende des Vorsprungs 804 dergestalt verstemmt ist, dass es das Kontaktelement 62 formschlüssig hintergreift. Entsprechendes gilt für den säulenförmigen Vorsprung 801 und das Kontaktelement 61. Außerdem hintergreifen die freien Enden der zu beiden Seiten des Kontaktelements 61 angeordneten Vorsprünge 802, 803, die bei dem Heißverstemmen zu einem gemeinsamen verstemmten Kopfende beider Vorsprünge 802 und 803 verschmolzen sind, formschlüssig das Kontaktelement 61. Das Kontaktelement 61 ist weiterhin passgenau in der von den Vorsprüngen 801, 802, 803 gebildeten und beim Verstemmen verformten Tasche 18 positioniert und dadurch unmittelbar und formschlüssig mit dem Kunststoffgehäuse 2 verbunden.

Das Herstellungsverfahren kann weitere, in Fig. 5 nicht dargestellte Schritte umfassen. Es wird auf Fig. 1 Bezug genommen. Insbesondere kann in einem weiteren Schritt ein Abziehtest durchgeführt werden, um zu ermitteln, ob die Verbindung zwischen den Kontaktelementen 6, und dem Kunststoffgehäuse 2 hinreichend statisch überbestimmt bzw. kraftschlüssig ist. Insbesondere kann sodann ein Volumen 501 des Kunststoffgehäuses 2 auf einer Seite der Ultraschallmembran 3 teilweise mit Silikonschaum vergossen werden, um die Ultraschallmembran zu dämpfen. Es ist dabei allerdings gemäß der vorgeschlagenen Lösung nicht erforderlich, die Kontaktelemente 6, 61, 62 vollständig zu vergießen. Sodann kann die Leiterplatte 12 auf den Kontaktstiftabschnitt 603 und den vertikalen Abschnitt des Kontaktstifts 11 zur externen Kontaktierung gesteckt werden. Auch hierbei ist vorteilhafterweise kein Vergießen erforderlich. Schließlich kann eine Oberseite des Kunststoffgehäuses 2 mit einem Deckel 23 verschlossen werden. Die Verbindung zwischen Deckel 23 und Kunststoffgehäuse 2 kann beispielsweise laserverschweißt werden.

Obwohl die vorliegende Erfindung anhand von Ausführungsbeispielen beschrieben wurde, ist sie vielfältig modifizierbar. Insbesondere können beliebig geformte und angeordnete Kunststoffabschnitte des Kunststoffgehäuses 2 verstemmt werden, solange dadurch eine unmittelbare formschlüssige Verbindung zwischen dem Kunststoffgehäuse 2 und dem Kontaktelement 6 hergestellt wird.

### BEZUGSZEICHENLISTE

- 1: Ultraschallsendeempfänger
- 2: Kunststoffgehäuse
- 3: Ultraschallmembran
- 4: Schallwandlerelement, Piezoelement
- 5: Innenraum des Kunststoffgehäuses
- 6: Kontaktelement
- 7: Innenoberfläche des Kunststoffgehäuses
- 8: Kunststoffelement
- 9: nicht verstemmter Vorsprung
- 10: Zwischenelement, Draht
- 11: Kontaktstift zur externen Kontaktierung
- 12: Leiterplatte
- 13: elektronische Bauelemente
- 14-17: Einführschrägen
- 18: Tasche
- 19: Entkopplungsring
- 20: Deckel
- 21, 22: Durchgangsöffnung
- 23: Deckel
- 61, 62: Kontaktelement
- 201: Hauptgehäuseabschnitt
- 202: Kopplungsgehäuseabschnitt
- 501, 502: Volumina im Innenraum des Kunststoffgehäuses
- 601: horizontaler Abschnitt des Kontaktelements, Leiterschienenabschnitt
- 602: schräg nach unten verlaufender Leiterschienenabschnitt des Kontaktelements
- 603: Kontaktstiftabschnitt des Kontaktelements
- 801, 804: säulenförmiger Vorsprung
- 802, 803: quaderförmiger bzw. wandförmiger Vorsprung

## Patentansprüche

1. Ultraschallsendeempfänger (1) für ein Fahrzeug, wobei der Ultraschallsendeempfänger (1) aufweist: ein Kunststoffgehäuse (2), eine Ultraschallmembran (3), ein Schallwandlerelement (4) zur Schwingungsanregung und Schwingungserfassung der Ultraschallmembran (3) und ein im Innenraum (5) des Kunststoffgehäuses (2) angeordnetes, elektrisch leitendes Kontaktelement (6) zur elektrischen Kontaktierung des Schallwandlerelements (4), wobei das Kunststoffgehäuse (2) und das Kontaktelement (6) durch Verstemmen mindestens eines einstückig mit dem Kunststoffgehäuse (2) ausgebildeten Kunststoffelements (8) unmittelbar und formschlüssig miteinander verbunden sind.

2. Ultraschallsendeempfänger nach Anspruch 1, **dadurch gekennzeichnet, dass** zwischen dem Kunststoffgehäuse (2) und dem Kontaktelement (6) eine Zwängung besteht.

3. Ultraschallsendeempfänger nach Anspruch 1 oder 2, **dadurch gekennzeichnet, dass** das Kontaktelement (6) ein starres Element ist und ein elektrischer Kontakt zwischen dem Kontaktelement (6) und dem Schallwandlerelement (4) über ein flexibles Zwischenelement (10) hergestellt ist.

4. Ultraschallsendeempfänger nach einem der vorhergehenden Ansprüche, **dadurch gekennzeichnet, dass** das mindestens eine verstemmte Kunststoffelement (8) einen Vorsprung (804) umfasst, der von dem Kunststoffgehäuse (2) nach innen ragt, durch eine Durchgangsöffnung (22) in dem Kontaktelement (62) verläuft, und dessen freies Kopfende dergestalt verstemmt ist, dass es das Kontaktelement (62) formschlüssig hintergreift.

5. Ultraschallsendeempfänger nach einem der vorhergehenden Ansprüche, **dadurch gekennzeichnet, dass** das mindestens eine verstemmte Kunststoffelement (8) mindestens zwei Vorsprünge (802, 803) umfasst, die von dem Kunststoffgehäuse (2) nach innen ragen, wobei das Kontaktelement (61) zwischen den mindestens zwei Vorsprüngen (802, 803) angeordnet ist, und wobei die freien Kopfenden der Vorsprünge (802, 803) dergestalt verstemmt sind, dass sie das Kontaktelement (61) formschlüssig hintergreifen.

6. Ultraschallsendeempfänger nach einem der vorhergehenden Ansprüche, wobei das Kontaktelement (6) einen schienenförmigen Abschnitt (601) umfasst und die unmittelbare formschlüssige Verbindung zwischen dem mindestens einen verstemmten Kunststoffelement (8) und dem schienenförmigen Abschnitt (603) hergestellt ist.

7. Ultraschallsendeempfänger nach einem der vorhergehenden Ansprüche, wobei das Kontaktelement (6) einen stiftförmigen Abschnitt (603) umfasst und eine Leiterplatte (12) mit mindestens einem elektronischen Bauelement (13) zum Ansteuern des Schallwandlerelements (4) auf den stiftförmigen Abschnitt (603) gesteckt ist.

8. Ultraschallsendeempfänger nach Anspruch 7, **dadurch gekennzeichnet, dass** die Leiterplatte (12) parallel zu der Ultraschallmembran (3) verläuft, ein Volumen (501) des Innenraums (5) des Kunststoffgehäuses (2) auf einer der Ultraschallmembran (3) zugewandten Seite der Leiterplatte (13) mindestens teilweise mit einem Schaum vergossen ist und ein Volumen (502) des Innenraums (5) auf einer der Ultraschallmembran (3) abgewandten Seite der Leiterplatte (13) frei von Schaumverguss ist.

9. Verfahren zum Herstellen eines Ultraschallsendeempfängers (1) für ein Fahrzeug mit den Schritten:
Ausbilden (S1) eines Kunststoffgehäuses (2) mit mindestens einem einstückig mit dem Kunststoffgehäuse (2) ausgebildeten Kunststoffelement (8);
Befestigen (S2) einer Ultraschallmembran (3) mit einem Schallwandlerelement (4) zur Schwingungsanregung und Schwingungserfassung der Ultraschallmembran an dem Kunststoffgehäuse (2);
Anordnen (S3) eines elektrisch leitenden Kontaktelements (6) im Innenraum (5) des Kunststoffgehäuses (2);
Kontaktieren (S4) des Kontaktelements (6) mit dem Schallwandlerelement (4); und
unmittelbares und formschlüssiges Verbinden des Kunststoffgehäuses (2) mit dem Kontaktelement (6) durch Verstemmen (S5) des mindestens einen einstückig mit dem Kunststoffgehäuse (2) ausgebildeten Kunststoffelements (8).

10. Verfahren nach Anspruch 9, **dadurch gekennzeichnet, dass** das Kunststoffgehäuse (2) einstückig mit dem mindestens einem Kunststoffelement (8) ausgebildet wird, das mindestens einen Vorsprung (801, 802, 803, 804) umfasst, der von dem Kunststoffgehäuse (2) nach innen ragt und an seinem freien Kopfende eine Einführschräge (14-16) aufweist,
wobei das Kontaktelement (61, 62) beim Anordnen (S3) in dem Innenraum (5) des Kunststoffgehäuses (2) von der Einführschräge (14-16) geführt und positioniert wird.

11. Verfahren nach Anspruch 10, **dadurch gekennzeichnet, dass** das mindestens eine einstückig mit dem Kunststoffgehäuse (2) ausgebildete Kunststoffelement (8) mehrere Vorsprünge (801, 802, 803) umfasst, die von dem Kunststoffgehäuse nach innen ragen, an ihren freien Kopfenden eine jeweilige Einführschräge (14-16) aufweisen und gemeinsam eine Tasche (18) ausbilden,
wobei das Anordnen (S3) des elektrisch leitenden Kontaktelements (61, 62) im Innenraum (5) des Kunststoffgehäuses (2) ein Einlegen des Kontaktelements (61, 62) in die Tasche (18) umfasst, wobei das Kontaktelement (61, 62) beim Einlegen von den Einführschrägen (14-16) geführt und positioniert wird.

12. Verfahren nach einem der Ansprüche 9 bis 11, **dadurch gekennzeichnet, dass** das Kontaktelement (6) ein starres Element ist und ein elektrischer Kontakt zwischen dem Kontaktelement (6) und dem Schallwandlerelement (4) über ein flexibles Zwischenelement (10) hergestellt wird.

13. Verfahren nach Anspruch 12, wobei das Kontaktieren (S4) des Kontaktelements (6) mit dem Schallwandlerelement (4) umfasst:
Verlöten eines Endes des flexiblen Zwischenelements (10) mit dem Kontaktelement (6) vor dem Anordnen (S3) des Kontaktelements (6) in dem Kunststoffgehäuse (2);
Verlöten des anderen Endes des flexiblen Zwischenelements (10) mit dem Schallwandlerelement (4) nach dem Anordnen des Kontaktelements (6) in dem Kunststoffgehäuse (2).

14. Verfahren nach Anspruch 13, wobei das Verlöten des anderen Endes des flexiblen Zwischenelements (10) mit dem Schallwandlerelement (4) und das Verstemmen (S5) des mindestens einen Kunststoffelements (8) gleichzeitig in einem Arbeitsgang erfolgen.

## Claims

1. Ultrasonic transceiver (1) for a vehicle, wherein the ultrasonic transceiver (1) has: a plastics housing (2), an ultrasonic membrane (3), a sound transducer element (4) for stimulating vibrations and detecting vibrations of the ultrasonic membrane (3), and an electrically conductive contact element (6), arranged in the interior (5) of the plastics housing (2), for making electrical contact with the sound transducer element (4), wherein the plastics housing (2) and the contact element (6) are connected directly and form-fittingly to each other by heat-staking of at least one plastics element (8) which is integrally formed with the plastics housing (2) .

2. Ultrasonic transceiver according to Claim 1, **characterized in that** there is a constraint between the plastics housing (2) and the contact element (6).

3. Ultrasonic transceiver according to Claim 1 or 2, **characterized in that** the contact element (6) is a rigid element and electrical contact between the contact element (6) and the sound transducer element (4) is established via a flexible intermediate element (10).

4. Ultrasonic transceiver according to one of the preceding claims, **characterized in that** the at least one heat-staked plastics element (8) comprises a protrusion (804) which projects inwards from the plastic housing (2), runs through a through opening (22) in the contact element (62), and the free head end of which is heat-staked in such a fashion that it engages form-fittingly behind the contact element (62).

5. Ultrasonic transceiver according to one of the preceding claims, **characterized in that** the at least one heat-staked plastics element (8) comprises at least two protrusions (802, 803) which project inwards from the plastics housing (2), wherein the contact element (61) is arranged between the at least two protrusions (802, 803), and wherein the free head ends of the protrusions (802, 803) are heat-staked in such a fashion that they engage form-fittingly behind the contact element (61).

6. Ultrasonic transceiver according to one of the preceding claims, wherein the contact element (6) comprises a rail-like section (601) and the direct form-fitting connection is established between the at least one heat-staked plastics element (8) and the rail-like section (603).

7. Ultrasonic transceiver according to one of the preceding claims, wherein the contact element (6) comprises a pin-like section (603), and a printed circuit board (12) with at least one electronic component (13) for activating the sound transducer element (4) is plugged on the pin-like section (603).

8. Ultrasonic transceiver according to Claim 7, **characterized in that** the printed circuit board (12) runs parallel to the ultrasonic membrane (3), a volume (501) of the interior (5) of the plastics housing (2) on a side of the printed circuit board (13) which faces the ultrasonic membrane (3) is encapsulated at least partially with a foam, and a volume (502) of the interior (5) on a side of the printed circuit board (13) which faces away from the ultrasonic membrane (3) is not encapsulated with foam.

9. Method for producing an ultrasonic transceiver (1) for a vehicle, having the following steps:
forming (S1) a plastics housing (2) with at least one plastics element (8) that is integrally formed with the plastics housing (2);
fastening (S2) an ultrasonic membrane (3) with a sound transducer element (4) in order to stimulate vibrations and detect vibrations of the ultrasonic membrane on the plastics housing (2);
arranging (S3) an electrically conductive contact element (6) in the interior (5) of the plastic housing (2);
contacting (S4) the contact element (6) with the transducer element (4); and
directly and form-fittingly connecting the plastics housing (2) to the contact element (6) by heat-staking (S5) the at least one plastics element (8) that is integrally formed with the plastics housing (2).

10. Method according to Claim 9, **characterized in that** the plastics housing (2) is formed integrally with the at least one plastics element (8) which comprises at least one protrusion (801, 802, 803, 804) which projects inwards from the plastics housing (2) and has a lead-in slope (14-16) at its free head end,
wherein the contact element (61, 62) is guided and positioned by the lead-in slope (14-16) during the arranging (S3) in the interior (5) of the plastics housing (2) .

11. Method according to Claim 10, **characterized in that** the at least one plastics element (8) which is integrally formed with the plastics housing (2) comprises a plurality of protrusions (801, 802, 803) which project inwards from the plastics housing, have a respective lead-in slope (14-16) at their free head ends, and together form a pocket (18),
wherein the arranging (S3) of the electrically conductive contact element (61, 62) in the interior (5) of the plastics housing (2) comprises inserting the contact element (61, 62) into the pocket (18), wherein the contact element (61, 62) is guided and positioned by the lead-in slopes (14-16) during the inserting.

12. Method according to one of Claims 9 to 11, **characterized in that** the contact element (6) is a rigid element and electrical contact between the contact element (6) and the sound transducer element (4) is established via a flexible intermediate element (10).

13. Method according to Claim 12, wherein the contacting (S4) of the contact element (6) with the transducer element (4) comprises:
soldering one end of the flexible intermediate element (10) to the contact element (6) before the arranging (S3) of the contact element (6) in the plastics housing (2); soldering the other end of the flexible intermediate element (10) to the sound transducer element (4) after the arranging of the contact element (6) in the plastics housing (2) .

14. Method according to Claim 13, wherein the soldering of the other end of the flexible intermediate element (10) to the sound transducer element (4) and the heat-staking (S5) of the at least one plastics element (8) take place at the same time in one working step.

## Revendications

1. Emetteur-récepteur ultrasonique (1) pour un véhicule, l'émetteur-récepteur ultrasonique (1) présentant : un boîtier en matière plastique (2), une membrane ultrasonique (3), un élément transducteur acoustique (4) pour l'excitation en vibration et pour la détection de vibration de la membrane ultrasonique (3), et un élément de contact (6) électriquement conducteur, disposé dans l'espace intérieur (5) du boîtier en matière plastique (2) pour la mise en contact électrique de l'élément transducteur acoustique (4), dans lequel le boîtier de matière plastique (2) et l'élément de contact (6) sont reliés ensemble directement et par complémentarité de forme par le matage d'au moins un élément de matière plastique (8) réalisé d'un seul tenant avec le boîtier de matière plastique (2).

2. Emetteur-récepteur ultrasonique selon la revendication 1, **caractérisé en ce qu'**un étranglement existe entre le boîtier en matière plastique (2) et l'élément de contact (6).

3. Emetteur-récepteur ultrasonique selon la revendication 1 ou 2, **caractérisé en ce que** l'élément de contact (6) est un élément rigide et un contact électrique entre l'élément de contact (6) et l'élément transducteur acoustique (4) est établi par le biais d'un élément intermédiaire (10).

4. Emetteur-récepteur ultrasonique selon l'une quelconque des revendications précédentes, **caractérisé en ce que** ledit au moins un élément de matière plastique (8) maté comprend une saillie (804) qui fait saillie du boîtier de matière plastique (2) vers l'intérieur, s'étend à travers une ouverture de passage (22) dans l'élément de contact (62) et dont l'extrémité de tête libre est matée de telle sorte qu'elle saisit l'élément de contact (62) par l'arrière par complémentarité de forme.

5. Emetteur-récepteur ultrasonique selon l'une quelconque des revendications précédentes, **caractérisé en ce que** ledit au moins un élément de contact maté (8) comprend au moins deux saillies (802, 803) qui font saillie du boîtier de matière plastique (2) vers l'intérieur, dans lequel l'élément de contact (61) est disposé entre les au moins deux saillies (802, 803), et dans lequel les extrémités de tête libres des saillies (802, 803) sont matées de telle sorte qu'elles saisissent l'élément de contact (61) par l'arrière par complémentarité de forme.

6. Emetteur-récepteur ultrasonique selon l'une quelconque des revendications précédentes, dans lequel l'élément de contact (6) comprend une partie en forme de rail (601), et la liaison directe par complémentarité de forme entre ledit au moins un élément de matière plastique maté (8) et la partie en forme de rail (603) est établie.

7. Emetteur-récepteur ultrasonique selon l'une quelconque des revendications précédentes, dans lequel l'élément de contact (6) comprend une partie en forme de broche (603), et une carte de circuits imprimés (12) pourvue d'au moins un composant électronique (13) pour piloter l'élément transducteur acoustique (4) est enfichée sur la partie en forme de broche (603).

8. Emetteur-récepteur ultrasonique selon la revendication 7, **caractérisé en ce que** la carte de circuits imprimés (12) s'étend en parallèle à la membrane ultrasonique (3), un volume (501) de l'espace intérieur (5) du boîtier de matière plastique (2) est scellé au moins partiellement avec de la mousse sur la face de la carte de circuits imprimés (13), tournée vers la membrane ultrasonique (3), et un volume (502) de l'espace intérieur (5) sur une face de la carte de circuits imprimés (13), détournée de la membrane ultrasonique (3), est exempt de tout scellement avec de la mousse.

9. Procédé permettant de fabriquer un émetteur-récepteur ultrasonique (1) pour un véhicule, comprenant les étapes consistant à :
réaliser (81) un boîtier de matière plastique (2) avec au moins un élément de matière plastique (8) réalisé d'un seul tenant avec le boîtier de matière plastique (2) ;
fixer (S2) au boîtier de matière plastique (2) une membrane ultrasonique (3) pourvue d'un élément transducteur acoustique (4) pour l'excitation en vibration et la détection de vibration de la membrane ultrasonique ;
disposer (S3) un élément de contact (6) électriquement conducteur dans l'espace intérieur (5) du boîtier de matière plastique (2) ;
mettre en contact (S4) l'élément de contact (6) avec l'élément transducteur acoustique (4) ; et
relier directement et par complémentarité de forme le boîtier de matière plastique (2) à l'élément de contact (6) par matage (S5) dudit au moins un élément de matière plastique (8) réalisé d'un seul tenant avec le boîtier de matière plastique (2) .

10. Procédé selon la revendication 9, **caractérisé en ce que** le boîtier de matière plastique (2) est réalisé d'un seul tenant avec ledit au moins un élément de matière plastique (8) qui comprend au moins une saillie (801, 802, 803, 804) qui fait saillie du boîtier de matière plastique (2) vers l'intérieur et présente à son extrémité de tête libre un chanfrein d'introduction (14 à 16),
dans lequel l'élément de contact (61, 62) est guidé et positionné par le chanfrein d'introduction (14 à 16) lorsqu'il est disposé (S3) dans l'espace intérieur (5) du boîtier de matière plastique (2).

11. Procédé selon la revendication 10, **caractérisé en ce que** ledit au moins un élément de matière plastique (8) réalisé d'un seul tenant avec le boîtier de matière plastique (2) comprend plusieurs saillies (801, 802, 803) qui font saillie du boîtier de matière plastique vers l'intérieur, présentent un chanfrein d'introduction (14 à 16) respectif au niveau de leurs extrémités libres et réalisent ensemble une poche (18),
dans lequel la disposition (S3) de l'élément de contact (61, 62) électriquement conducteur dans l'espace intérieur (5) du boîtier de matière plastique (2) comprend une mise en place de l'élément de contact (61, 62) dans la poche (18), l'élément de contact (61, 62) étant guidé et positionné par les chanfreins d'introduction (14 à 16) lors de la mise en place.

12. Procédé selon l'une quelconque des revendications 9 à 11, **caractérisé en ce que** l'élément de contact (6) est un élément rigide et un contact électrique entre l'élément de contact (6) et l'élément transducteur acoustique (4) est établi par le biais d'un élément intermédiaire (10).

13. Procédé selon la revendication 12, dans lequel la mise en contact (S4) de l'élément de contact (6) avec l'élément transducteur acoustique (4) comprend les étapes consistant à :
braser une extrémité de l'élément intermédiaire flexible (10) avec l'élément de contact (6) avant de disposer (S3) l'élément de contact (6) dans le boîtier de matière plastique (2) ;
braser l'autre extrémité de l'élément intermédiaire flexible (10) avec l'élément transducteur acoustique (4) après avoir disposé l'élément de contact (6) dans le boîtier de matière plastique (2).

14. Procédé selon la revendication 13, dans lequel le brasage de l'autre extrémité de l'élément intermédiaire flexible (10) avec l'élément transducteur acoustique (4) et le matage (S5) dudit au moins un élément de matière plastique (8) ont lieu en même temps en une seule opération.
